# EUROPEAN PATENT SPECIFICATION

(11) **EP 2 889 131 B1**
(45) Date of publication and mention of the grant of the patent: **17.10.2018**
(21) Application number: 14193981.9
(22) Date of filing: 20.11.2014
(51) Int. Cl.: B32B 7/08, B32B 5/26, B32B 27/08, B32B 3/08

(54) **A LAMINATED COMPOSITE STRUCTURE AND RELATED METHOD**
SCHICHTVERBUNDSTRUKTUR UND ZUGEHÖRIGES VERFAHREN
STRUCTURE COMPOSITE STRATIFIÉE ET PROCÉDÉ ASSOCIÉ

(30) Priority: 17.12.2013 GB 201322275
(43) Date of publication of application: 01.07.2015
(73) Proprietor: Rolls-Royce plc, London SW1E 6AT (GB)
(72) Inventor: Yasaee, Mehdi, Derby, Derbyshire DE24 8BJ (GB); Lycett, Alex, Derby, Derbyshire DE24 8BJ (GB)
(74) Representative: Rolls-Royce plc

(56) References cited:
- EP-A1- 0 110 542
- WO-A1-92/08551
- US-A- 3 834 832

## Description

The present disclosure relates to laminated composite structure, and more particularly relates a composite laminated structure having at least one reinforcing pin. The disclosure also relates to a method for reinforcing a laminated composite structure.

It is well known in the field of composite structures that two-dimensional composite laminates are relatively weak in the so-called "through thickness" or z-direction. At the interfaces between adjacent laminae in such structures there is a high tendency for the plies to de-bond or delaminate. This problem has been found to be particularly prevalent in composite laminates in which adjacent laminae have constituent fibres which are not aligned. This problem has therefore led to the development of various types of "through-thickness-reinforcement", commonly known by the acronym TTR, such as z-pinning, stitching, tufting, and three-dimensional weaving, all of which will be well known to those of skill in the art.

Z-pinning is a technique whereby a plurality of small pins are inserted into an uncured laminated composite structure such that the pins extend between adjacent laminae in the structure, which provides a significant improvement in through-thickness strength and delamination resistance of the composite structure. The most common type of pin insertion process is currently to use an ultra-sonic hammer and pre-formed arrays of pins. The pins are held in spaced relation to one another in a foam carrier. The foam carrier is positioned against a surface of the composite structure and the ultrasonic hammer is used to press the pins through and out of the foam and into the composite structure. This z-pinning technique requires the pins to have chamfered tips and for their outer surfaces to be relatively smooth. As the ultrasonic hammer urges the pins into the composite structure, it induces high frequency vibrations in them. The vibrating chamfered tips of the pins locally heat up and soften the matrix resin of the composite material, allowing the pins to penetrate the composite material with minimal disruption to the fibres. This process is efficient and has therefore become widely used for large-scale production of TTR composite structures. However, as indicated above, it places particular design requirements on the form of the pins which must be used.

Fibrous composite pins are widely used for z-pinning in order to reinforce composite structures. However, there are significant disadvantages in using this type of material for the pins. For example fibrous composite pins have a tendency to split during aggressive penetration of the structure to be reinforced, the material of the pins is rather brittle and can result in premature failure of the pins, and the pins will have a low transverse modulus and strength which reduces their effectiveness in shear loading of the reinforced structure.

For these reasons it has been proposed previously to use metal pins as an alternative. However, metal pins have heretofore suffered from a significant disadvantage themselves arising from the fact that their coefficient of thermal expansion is poorly matched to that of the composite materials which there are intended to reinforce. This can result in early debonding of the pins from the surrounding matrix material of the composite during the manufacturing process, thereby degrading the pins' reinforcing performance.

EP0110542 relates to concrete strengthening members and WO9208557 relates to cables for pre-stressing concrete. US3834832 relates to a fibre reinforced composite structure has two or more layers of fibre reinforced material, the layers being bonded together to provide resistance to delamination by fastening devices which extend transversely of the fibres from the fibre reinforced layers.

It is an object of the present disclosure to provide an improved laminated composite structure. It is another object of the present disclosure to provide an improved method for reinforcing a laminated composite structure.

According to a first aspect of the present disclosure, there is provided a laminated composite structure having a plurality of laminae formed of composite material, and at least one reinforcing pin provided within the structure so as to extend through and between adjacent laminae, wherein the or each pin has a core and an abrasive outer coating provided around the core.

Conveniently, the abrasive outer coating may include diamond.

Advantageously, the abrasive coating may comprise a plurality of diamond particles.

Said diamond particles may have an average particle size in the range of 5 to 100 micron, and optionally in the range of 30 to 50 microns. In particular embodiments the diamond particles may have an average particle size of approximately 40 microns.

The core may be a metal core. Such a metal core may be formed from steel. Alternatively such a metal core may be formed from a nickel-titanium alloy.

The core may be a composite core. Such a composite core may comprise fibres in a plastic matrix. For example, such a composite core may comprise carbon fibres and/or an epoxy resin matrix. The fibres of such a composite core may be unidirectional.

The or each reinforcing pin may be generally circular in transverse cross-section.

Conveniently, the core of the or each reinforcing pin may have a diameter in the range of 0.05 to 1.0 mm, and optionally in the range of 0.2 to 0.3 mm. In particular embodiments the metal core may have a diameter of approximately 0.25 mm.

There is also proposed a reinforcing pin for use in a laminated composite structure of the type described above.

According to a further aspect, there is provided a reinforcing pin for a laminated composite structure, the pin having a core and an abrasive outer coating provided around the core.

According to another aspect, there is provided a method for reinforcing a laminated composite structure having a plurality of laminae of composite material, the method comprising the steps of: forming at least one channel within the structure which extends through at least some of the laminae of the structure; providing at least one reinforcing pin sized for receipt within a respective said channel, inserting the or each reinforcing pin into a respective said channel; and at least partially curing the composite material, wherein the or each reinforcing pin has a core and an abrasive outer coating provided around the core.

Conveniently, the step of providing the or each reinforcing pin involves electroplating the abrasive coating on the core.

Advantageously, said step of electroplating involves the deposition of a powder comprising abrasive particles on the core.

Optionally, the abrasive outer coating includes diamond particles.

The core may be provided as a length of steel wire. Alternatively, the core may be provided as a length of wire formed from a nickel-titanium alloy.

The laminated composite structure according to any aspect and/or embodiment may be, for example, an organic matrix composite. The laminated composite structure may comprise organic matrix composite laminates, for example carbon fibre laminates. The laminated composite structure may comprise fibres (such as carbon fibres) formed in a plastic and/or epoxy resin matrix. The laminated composite structure may be a fibre reinforced plastic. The laminated composite structure may be formed of laminates comprising fibres (such as carbon fibres) formed in a plastic and/or epoxy resin matrix, and/or laminates comprising fibre reinforced plastic.

So that the disclosure may be more readily understood, and so that further features thereof may be appreciated, embodiments of the disclosure will now be described by way of example with reference to the accompanying drawings in which:
Figure 1 is a schematic perspective view showing a reinforcing pin in accordance with the present disclosure;
Figure 2 is a micrograph image showing the outer surface of the pin in greater detail;
Figure 3 is a micrograph image showing the pin partially inserted into a laminated composite structure;
Figure 4 is a schematic cross-sectional view showing a step in a method of reinforcing a laminated composite structure, in which the reinforcing pin of figures 1 and 2 is inserted into a channel provided in the composite structure;
Figure 5 is a schematic cross-sectional view similar to that of figure 4, but which shows the finished reinforced structure following a curing process; and
Figure 6 is a plot of load against displacement showing the performance characteristics of a single reinforcing pin according to the present disclosure compared to prior art reinforcing pins under load.

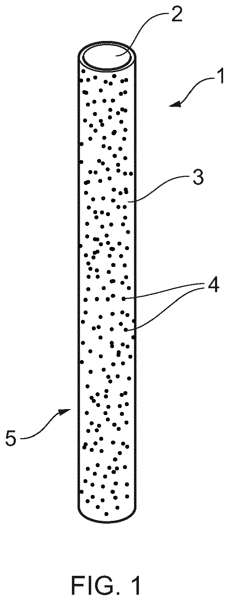

Turning now to consider figure 1 in more detail, there is shown a reinforcing pin 1 for z-pinning reinforcement of laminated composite structures. The pin has, by way of example, a central metal core 2 around which there is provided an outer coating 3.

The metal core 2 of the pin may be formed of any convenient material, such as metal, although it is proposed that steel or a nickel-titanium alloy will be particularly suitable for use in the present disclosure. In the arrangement shown, the core 2 of the pin 1 has a generally cylindrical form and so has a circular transverse cross-section, although it is to be appreciated that in variants the core may take other convenient forms. The core 2 may be defined by a length of fine wire which may, for example, have a diameter in the range of 0.3 to 0.4 mm. The wire core 2 may have a diameter of 0.25 mm in particular embodiments.

The outer coating 3 is abrasive, and may include a plurality of small particles 4 of a suitable hard material (such as ceramic, polymeric or metallic materials), indicated schematically at 4 in figure 1, such that the coating 3 defines an abrasive outer surface 5 of the reinforcing pin 1. It has been found that a diamond outer coating 3 provides a reinforcing pin with particular good performance characteristics. Whilst the disclosure is therefore described in detail with particular reference to a diamond coating 3, it is to be appreciated that the invention is not limited to the use of diamond material, and indeed other abrasive substances could be used for the outer coating instead.

The diamond outer coating 3 may be applied to the wire core 2 via an electroplating process of a type known *per se,* which allows the coating 3 to be applied very thinly and uniformly over the wire core 2. It is envisaged that the diamond coating will comprise diamond particles having an average particle size in the range of 5 to 100 microns, and optionally in the range of 30 to 50 microns (approximately equivalent to 240 to 320 grit size). For example, the average particle size may be 40 microns (approximately equivalent to 280 grit size) in some embodiments.

It is important to note, however, that whilst electroplating may be a technique which is particularly suitable for applying the outer coating 3 to the metal core 2, other techniques may be used instead. For example, hard abrasive particles 4 may be adhesively bonded to the core 2 using a suitable adhesive such as epoxy resin.

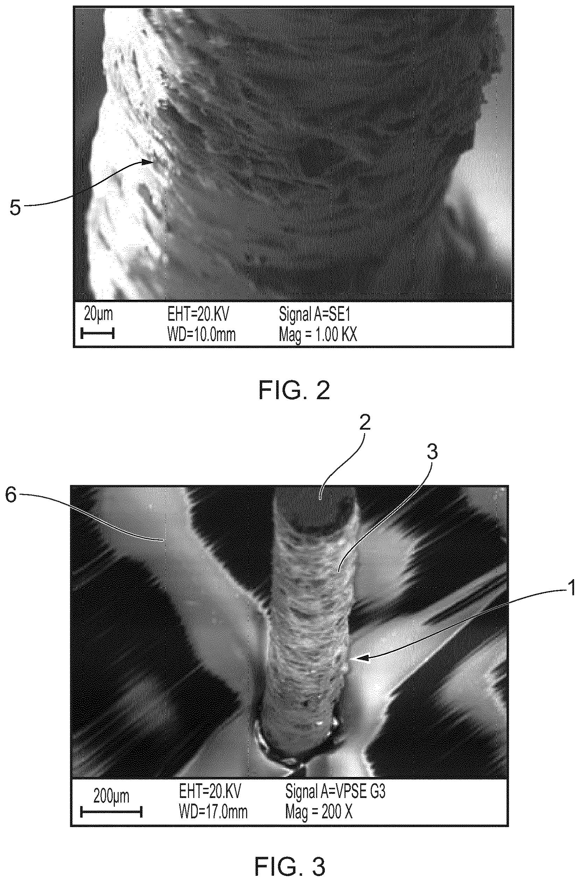

Figures 2 and 3 are scanning electron microscope images of an exemplary reinforcing pin 1 of the type described above, taken at 100,000 times and 200 times magnification respectively. Figure 2 shows in detail the surface texture of the outer surface 5 of the pin 1, and Figure 3 shows the pin 1 partially inserted into a laminated composite structure 6. Both images, but figure 2 in particular, show the rough and abrasive nature of the outer surface 5 of the pin which results from the diamond coating 3.

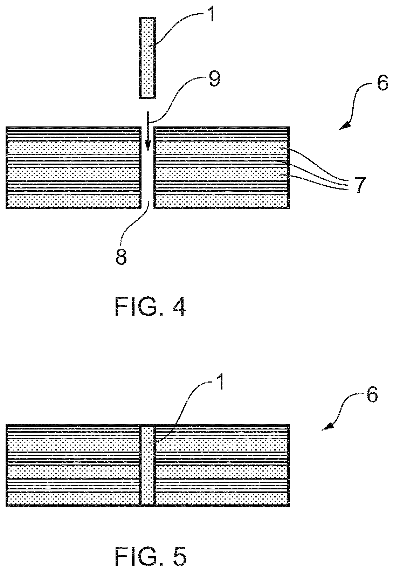

Turning now to consider figure 4, there is illustrated a section of a laminated composite structure 6 which has a plurality of laminae 7, each comprising a plurality of fibres held in a curable resin matrix. The particular composite structure 6 illustrated is configured such that alternate laminae 7 have their constituent fibres arranged orthogonally to one another, but other fibre orientations are also possible.

In order to reinforce the composite structure 6, a channel 8 is formed through a region of the structure so as to extend through the laminae 7. The channel 8 may be formed by initially softening the composite material via the application of heat, pressing a stiff metal needle (not shown) through the laminae 7 and then removing the needle to leave the channel 8 as shown. The channel 8 has a diameter appropriate to receive a reinforcing pin 1 of the type described above as a close sliding fit. The reinforcing pin 1 described above is then inserted axially into the preformed channel 8 as indicated by arrow 9.

Figure 5 shows the reinforcing pin 1 fully received within the preformed channel 8. As will be noted, in this position the pin 1 extends through and between adjacent laminae 7, thereby bridging the interfaces between adjacent laminae. Once the reinforcing pin 1 is received in the channel 8 as shown, the composite material of the structure is then cured, whereupon the matrix material flows into intimate contact with the abrasive outer surface 5 of the reinforcing pin, thereby securely anchoring the pin 1 within the composite structure 6.

As will be appreciated, it will be usual to reinforce a laminated composite structure 6 in this way by the use of a plurality of reinforcing pins 1, each pin being inserted into a respective preformed channel 8.

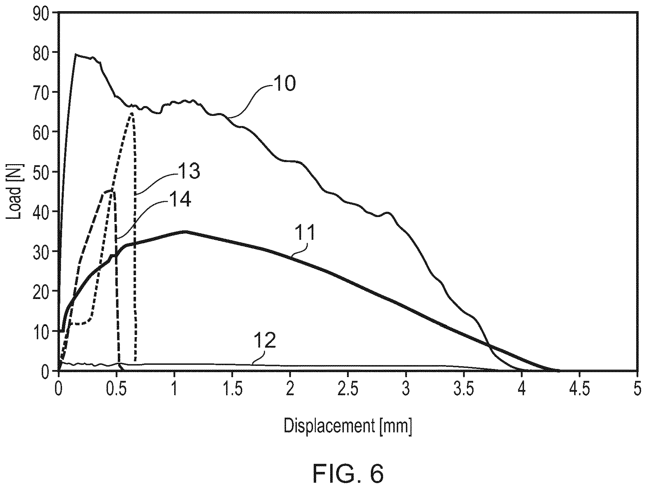

It has been found that diamond coated reinforcing pins 1 of the type described above provide significantly improved performance when used for TTR of composites compared to prior art carbon fibre or smooth steel reinforcing pins. Figure 6 is a plot of load vs displacement for both Mode I and Mode II loadings of composite structures reinforced with a single pin of various types. Curves 10, 11 and 12 represent respective plots for: a diamond coated pin 1 in accordance with the present disclosure; a prior art carbon pin; and a prior art smooth steel pin under a Mode I load. As will be appreciated from a comparison of these curves, the diamond coated pin 1 of the present disclosure shows a very significant improvement in Mode I strength properties over the prior art pins.

Curves 13 and 14 represent respective plots for: the diamond coated pin and the carbon pin under a Mode II load, and again clearly show a significant improvement in performance for the diamond coated pin when compared to the carbon pin.

Similar improvements in performance can also be expected for reinforcing pins having other abrasive outer coatings apart from the particular diamond coating proposal discussed in detail above.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

## Claims

1. A laminated composite structure (6) having a plurality of laminae (7) formed of composite material, and at least one reinforcing pin (1) provided within the structure so as to extend through and between adjacent laminae (7), wherein the or each pin (1) has a core (2) and an abrasive outer coating (3) provided around the core.

2. A laminated composite structure according to claim 1, wherein the abrasive outer coating (3) includes diamond.

3. A laminated composite structure according to claim 1 or claim 2, wherein the abrasive coating (3) comprises a plurality of diamond particles (4).

4. A laminated composite structure according to claim 3, wherein said diamond particles (4) have an average particle size in the range of 30 to 50 microns.

5. A laminated composite structure according to any preceding claim, wherein the core is a metal core, optionally formed from steel or a nickel-titanium alloy.

6. A laminated composite structure according to any one of claims 1 to 4, wherein the core is a composite core, optionally comprising fibres in a plastic matrix.

7. A laminated composite structure according to any preceding claim, wherein the or each reinforcing pin (1) is generally circular in transverse cross-section.

8. A laminated composite structure according to claim 7, wherein the core of the or each reinforcing pin (1) has a diameter in the range of 0.05 to 1.0 mm.

9. A method for reinforcing a laminated composite structure (6) having a plurality of laminae (7) of composite material, the method comprising the steps of: forming at least one channel (8) within the structure (6) which extends through at least some of the laminae (7) of the structure; providing at least one reinforcing pin (1) sized for receipt within a respective said channel (8), inserting the or each reinforcing pin (1) into a respective said channel (8); and at least partially curing the composite material, wherein the or each reinforcing pin (1) has a core (2) and an abrasive outer coating (3) provided around the core.

10. A method according to claim 9, wherein the step of providing the or each reinforcing pin (1) involves electroplating the abrasive coating (3) on the core (2).

11. A method according to claim 10, wherein said step of electroplating involves the deposition of a powder comprising abrasive particles (4) on the core.

12. A method according to any one of claims 9 to 11, wherein the abrasive outer coating (3) includes diamond particles (4).

13. A method according to any one of claims 9 to 12, wherein the core (2) is a metal core or a composite core.

## Patentansprüche

1. Laminierte Kompositstruktur (6) mit einer Vielzahl von aus Kompositmaterial gebildeten Schichten (7) und mindestens einem Verstärkungsstift (1), der innerhalb der Struktur so bereitgestellt ist, dass er sich durch und zwischen benachbarte Schichten (7) erstreckt, wobei der oder jeder Stift (1) einen Kern (2) und eine abrasive Außenbeschichtung (3) aufweist, die um den Kern vorgesehen ist.

2. Laminierte Kompositstruktur nach Anspruch 1, wobei die abrasive Außenbeschichtung (3) Diamant enthält.

3. Laminierte Kompositstruktur nach Anspruch 1 oder Anspruch 2, wobei die abrasive Außenbeschichtung (3) eine Vielzahl von Diamantpartikeln (4) enthält.

4. Laminierte Kompositstruktur nach Anspruch 3, wobei die Diamantpartikel (4) eine durchschnittliche Partikelgröße im Bereich 30 bis 50 Mikronen haben.

5. Laminierte Kompositstruktur nach einem der vorstehenden Ansprüche, wobei der Kern ein Metallkern ist, der optional aus Stahl oder einer Nickel-Titan-Legierung gebildet ist.

6. Laminierte Kompositstruktur nach einem der Ansprüche 1 bis 4, wobei der Kern ein Kompositkern ist, der optional Fasern in einer Kunststoffmatrix umfasst.

7. Laminierte Kompositstruktur nach einem der vorstehenden Ansprüche, wobei der oder jeder Verstärkungsstift (1) im Querschnitt im Allgemeinen kreisförmig ist.

8. Laminierte Kompositstruktur nach Anspruch 7, wobei der Kern des oder jedes Verstärkungsstifts (1) einen Durchmesser im Bereich 0,05 bis 1,0 mm hat.

9. Verfahren zum Verstärken einer laminierten Kompositstruktur (6) mit einer Vielzahl von Schichten (7) aus Kompositmaterial, wobei das Verfahren die folgenden Schritte umfasst: Bilden mindestens eines Kanals (8) innerhalb der Struktur (6), der sich durch mindestens einige der Schichten (7) der Struktur erstreckt; Bereitstellen mindestens eines Verstärkungsstifts (1), dessen Größe zur Aufnahme in einem jeweiligen Kanal (8) bemessen ist, Einführen des oder jedes Verstärkungsstifts (1) in den jeweiligen Kanal (8); und mindestens teilweises Aushärten des Kompositmaterials, wobei der oder jeder Verstärkungsstift (1) einen Kern (2) und eine um den Kern vorgesehene abrasive Außenbeschichtung (3) aufweist.

10. Verfahren nach Anspruch 9, wobei der Schritt des Bereitstellens des oder jedes Verstärkungsstifts (1) das Galvanisieren der abrasiven Beschichtung (3) auf dem Kern (2) beinhaltet.

11. Verfahren nach Anspruch 10, wobei der Schritt des Galvanisierens das Ablagern eines abrasive Partikel (4) enthaltenen Pulvers auf dem Kern beinhaltet.

12. Verfahren nach einem der Ansprüche 9 bis 11, wobei die abrasive Außenbeschichtung (3) Diamantpartikel (4) enthält.

13. Verfahren nach einem der Ansprüche 9 bis 12, wobei der Kern (2) ein Metallkern oder ein Kompositkern ist.

## Revendications

1. Structure composite stratifiée (6) possédant une pluralité de lamelles (7) réalisées avec un matériau composite, et au moins un axe de renforcement (1) pourvu au sein de la structure, de façon qu'il s'étende à travers et entre des lamelles adjacentes (7), l'axe, ou chaque axe (1), possédant un noyau (2) et un revêtement extérieur abrasif (3) pratiqué autour du noyau.

2. Structure composite stratifiée selon la revendication 1, le revêtement extérieur abrasif (3) comprenant du diamant.

3. Structure composite stratifiée selon la revendication 1 ou la revendication 2, le revêtement extérieur abrasif (3) comprenant une pluralité de particules de diamant (4).

4. Structure composite stratifiée selon la revendication 3, la taille moyenne desdites particules de diamant (4) étant comprise dans la plage allant de 30 à 50 microns.

5. Structure composite stratifiée selon une quelconque des revendications précédentes, le noyau étant un noyau métallique, réalisé en option en acier ou en alliage de nickel et titane.

6. Structure composite stratifiée selon une quelconque des revendications 1 à 4, le noyau étant un noyau composite, comprenant en option des fibres dans une matrice de plastique.

7. Structure composite stratifiée selon une quelconque des revendications précédentes, l'axe ou chaque axe de renforcement (1) présentant une section transversale de forme généralement circulaire.

8. Structure composite stratifiée selon la revendication 7, le noyau du ou de chaque axe de renforcement (1) mesurant de 0,05 à 1,0 mm de diamètre.

9. Méthode de renforcement d'une structure composite stratifiée (6) possédant une pluralité de lamelles (7) en matériau composite, la méthode comprenant les étapes suivantes :
formation d'au moins un canal (8) au sein de la structure (6) s'étendant à travers au moins certaines des lamelles (7) de la structure ;
la mise en place d'au moins un axe de renforcement (1) pouvant s'introduire dans son propre canal (8) respectif, l'insertion du ou de chaque axe de renforcement (1) dans un canal (8) respectif ; et
le traitement au moins partiel du matériau composite, le ou chaque axe de renforcement (1) possédant un noyau (2) et un revêtement extérieur abrasif (3) placé autour du noyau.

10. Méthode selon la revendication 9, l'étape de réalisation du ou de chaque axe de renforcement (1) comportant l'électrodéposition du revêtement abrasif (3) sur le noyau (2).

11. Méthode selon la revendication 10, ladite étape d'électrodéposition comportant le dépôt sur le noyau d'une poudre comprenant des particules abrasives (4).

12. Méthode selon une quelconque des revendications 9 à 11, le revêtement extérieur abrasif (3) comprenant des particules de diamant (4).

13. Méthode selon une quelconque des revendications 9 à 12, le noyau (2) étant un noyau métallique ou un noyau composite.
